# EUROPEAN PATENT SPECIFICATION

(11) **EP 0 623 221 B1**
(45) Date of publication and mention of the grant of the patent: **15.10.1997**
(21) Application number: 94900820.5
(22) Date of filing: 18.11.1993
(51) Int. Cl.: G01V 1/00

(54) **METHOD AND DEVICE FOR THE DETECTION OF STRUCTURAL CHANGES IN SOLID BODIES**
VERFAHREN UND VORRICHTUNG ZUM ERKENNEN VON STRUKTURVERÄNDERUNGEN IN FESTKÖRPERN
PROCEDE ET DISPOSITF DE DETECTION DE VARIATIONS DE LA STRUCTURE DE CORPS SOLIDES

(30) Priority: 21.11.1992 DE 4239224
(43) Date of publication of application: 09.11.1994
(73) Proprietor: International Business Machines Corporation, Armonk, N.Y. 10504 (US)
(72) Inventor: RÖDER, Helmut, D-70569 Stuttgart (DE)
(74) Representative: Schäfer, Wolfgang, Dipl.-Ing.
(86) International application number: EP9303232
(87) International publication number: WO9412895

(56) References cited:
- EP-A- 0 067 924
- DE-A- 4 004 170
- US-A- 4 837 582

## Description

The invention relates to a method and a device for the detection of structural changes in solid bodies by the detection of electrical field strength changes generated by load changes, mechanical stresses, etc. in the material. The method revealed and the corresponding measuring device are particularly suited for the recording of geoelectrical field changes and may thus be used for the prediction or evaluation of volcanic activity or earthquakes.

It is known that, in the event of load changes and the occurrence of internal mechanical stresses, solid bodies made from non-conducting or poorly conducting materials generate electrical field changes in their surroundings which may be recorded by sensitive measuring devices. These mechanical stresses frequently correlate with the origination of cracks or fractures within the body. By recording the field changes it is therefore possible to obtain information regarding structural changes such as material fatigue, deformation or crack formation. Special measures have to be taken to suppress interfering signals generated by the power supply network or transmitting stations, for instance, since the field changes occurring are only of a very low intensity.

DE OS 4004170 reveals a method and measuring equipment for monitoring the occurrence or propagation of fractures or cracks in materials. Conducting sensor elements in various embodiments, appropriate for the subject of the measurement concerned, are specified for the detection of the electrical field changes. The signals generated in the sensors are amplified by a separate electronic circuit and then recorded by a recording unit. Various band pass filters are provided to reduce electrical interference. A frequency of 100 kHz is specified as the lower limit frequency. Lower frequency signals are completely suppressed in this equipment and therefore only relatively high frequency signals are recorded and evaluated.

Another method and device specially for the measurement of electromagnetic waves generated by mechanical stresses in the earth's mantle, is revealed in US patent number 4 837 582. In this method, a metallically conducting sensor is inserted deep in the earth (approximately 1000 m) as the antenna. The length of the probe is tuned to 1/4 of the wavelength of geoelectrically generated waves in the frequency range around 3 kHz. The consequence of this complex arrangement is that only a tight frequency range is optimally captured by the antenna and that low frequency interfering signals originating in the earth's surface only reach the deeply inserted probe in an attenuated form.

European Patent no. 0 067 924 also reveals a method for the prediction of earthquakes. A probe comprising two identical metal electrodes galvanically inserted in the ground at a distance of approximately 100 m is used for recording. Electronic filters suppress interfering signals in such a way that only electrical signals in the deep low frequency range below 2 Hz are recorded and amplified.

The state of the art referred to makes it clear that one particular problem in the detection of electrical signals generated by mechanical stresses is the effective suppression of interfering signals. Building on the basis of the state of the art, the objective of the present invention is to develop an improved method and equipment for the recording of structural changes in solid bodies.

This objective is achieved in accordance with the invention and the claims by means of a new design of probe which, on the one hand due to its design and on the other hand due to the implementation of electronic components, permits a high degree of amplification of the signals received, simultaneously keeping a particularly low level of interference. For this purpose, the probe comprises at least two different elements made from conducting material. One element covers a large area and is mounted on the surface of or in the vicinity of the object to be measured. A second element, which has smaller dimensions than the first is installed into a void in the body to be measured whilst being electrically insulated from it. The large first probe element serves as a reference electrode, i.e. all potential changes in the smaller probe electrode are amplified and recorded with reference to the potential in the larger electrode. The spacing between the useful signal and the interfering signal may be achieved by also installing the electronic amplification circuit in the void in the body to be measured.

Further embodiments and features of the invention will be explained with reference to the example embodiment which follows and with reference to the drawing.

The drawings show:
- Figure 1: a sketch representation of the probe in accordance with the invention;
- Figure 2: an embodiment with screening effect;
- Figure 3: the installation of the amplifying electronics within a probe element;
- Figure 4: a combination of a number of probes;
- Figure 5: a special embodiment of the probe with high sensitivity (side view).

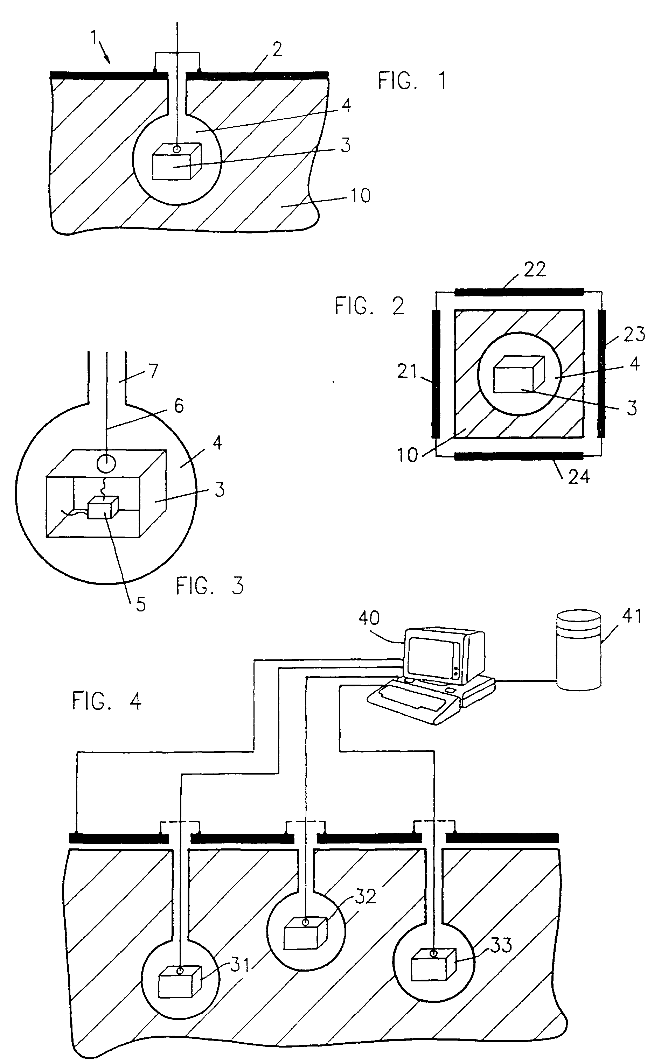

Figure 1 shows a probe 1 which consists of two different probe elements 2 and 3. The probe elements consist of an electrically conducting material, eg. metal. One element 2 is mounted on the surface of the body to be measured 10 and may be in galvanic contact with the body 10 over its entire surface. Alternatively, this probe element 2 may also be installed in the immediate vicinity of the body to be measured 10 in such a way that it encloses a part of the subject's surface. The form of said element 2 not being restricted to a plane, but it may also follow irregularities such as bulges or depressions. The probe element may also consist of a number of parts 21, 22, 23, 24 which are connected together electrically. Depending on the size of the body to be measured (structure, bridge pier, etc.), it is also possible to enclose the body entirely. An arrangement of this type is illustrated schematically in figure 2 in section.

The second probe element 3 is located in a void 4 inside the body 10 and electrically insulated from this and the first probe element. It has a smaller surface area than the first probe element 2. As figure 3 shows, the electronic circuit 5 used to amplify the signals received is also installed in the void 4. Interference which could be generated by longer connecting wires, for instance, is prevented by the circuit being immediately adjacent to the receiving probe element 3.

In order effectively to suppress additional interfering signals from external sources, the electronic circuit is preferably enclosed by a part of the area of the external probe element 2 and/or by parts of the inner probe element 3, thus forming a Faraday cage. The connection between the electronic circuit and the external probe element 2 is made through a screened cable 6 which is laid through a bore 7 to the surface. This connecting cable may also be used to pass the supply voltage required to the electronic circuit.

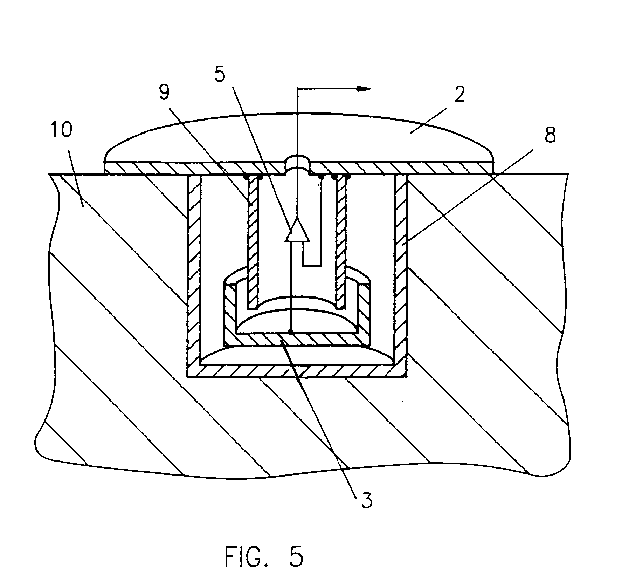

A particular advantage of the arrangement in accordance with the invention is that even probes with relatively small dimensions are adequate for assured detection. Electrical field changes were measured experimentally with a probe as illustrated in figure 5, the probe element 2 consisting of a metal plate only approximately 50 cm in diameter with a cylindrical addition 9 of approximately 10 cm in length and 5 cm in diameter. Probe element 2 is galvanically connected with the body to be measured 10. Probe element 3 took the form of a metal beaker approximately 7 cm in diameter and was disposed such that it partially enclosed the end of the cylindrical addition 9. An operational amplifier was accommodated inside the cylindrical addition 9 and connected to the probe elements 2 and 3 in accordance with figure 5. The portion of the probe inserted into the body to be measured 10 was surrounded by an insulating screening 8 to prevent interfering effects arising from electrical contact. Signals which correlated with earth tremor events were obtained with this arrangement positioned at a depth of just 50 cm in the ground.

Other forms of the probe 1 are also possible, as long as the arrangement satisfies the general prescription that a large-area screening probe element 2 which preferably stands in galvanic contact with the body to be measured is combined with a receiving probe element 3 which is insulated from the body to be measured 10 and the probe element 2 and is installed in a void in the body to be measured. The distance between probe elements 2 and 3 will preferably be in the range of a few millimeters.

Optical fibre cables may also be used, after suitable conversion of the electrical signals to optical signals, for the transmission of the metering signals. This method precludes electro-magnetic interference.

Electronic filters may additionally be incorporated in the amplifier circuit 5 in addition to the suppression of the interfering signals by screening effects and short connection lines described. The receiving range of the probe may be restricted to particular frequency ranges in this way.

The low frequency range between 0.1 and 100 Hz is of particular interest in the detection of geophysical processes.

In many cases, recording using a single probe at one sampling point is not adequate for a differentiated analysis of the structural changes in the body being studied. For example, when using the probe in accordance with the invention for the detection of geophysical processes it is desirable that not only absolute variations in the geoelectrical field at one site be measured, but that local deviations distributed over a larger region be detected as far as possible. A number of probes may be operated simultaneously to give a site-dependent recording of this type. Figure 4 shows, by way of example, three probes, it being possible to arrange at different depths the probe elements 31, 32, 33 inserted into the body.

Naturally, both the number and the geometrical arrangement of the probes may be varied as desired according to the task in hand. A number of values recorded simultaneously at different sites may be drawn on for evaluation with such an arrangement. Combination of the data obtained in this way allows, for example, the position of sites of origin and/or position and development of the structural change to be established form the intensities detected at each site and the phase differences.

A particularly advantageous measuring arrangement consists of six probes located at the corners of a hexagon.

To allow rapid evaluation, the data supplied by the probes are preferably digitized and processed in a processor system 40. A connected storage device 41 allows free access to the results of measurement so that developments over time may be followed. This offers the opportunity of, for example, continuously and largely automatically monitoring volcanic activity or movements in the earth's crust and initiating appropriate warning signals when critical values occur.

## Claims

1. Measuring device for the detection of structural changes in solid bodies (10) in which electrical field changes are recorded by means of one or more electrically conducting probes (1), amplified by an electronic circuit (5) and then processed and recorded in an evaluation unit (40, 41),
wherein
each probe (1) consists of at least two elements (2, 3) insulated from one another, the first element (2) being of planar design and the second element (3) being inserted in a void (4) in the body to be measured and insulated from it,
and wherein the electronic circuit (5) for amplifying the potential difference between the elements (2, 3) is also located in the void (4) in the body to be measured.

2. Measuring device as claimed in claim 1 with the first probe element (2) being in galvanic contact with the body to be measured (10).

3. Measuring device as claimed in claims 1 and 2, with the first probe element (2) comprising a number of separately installed parts (21, 22, 23, 24) electrically connected together.

4. Measuring device as claimed in claims 1 and 2 with the electronic circuit (5) at least partially surrounded by one of the probe elements (2, 3) to screen out interfering signals.

5. Measuring device as claimed in one of the claims 1 to 4, in which the first probe element comprises a planar metal electrode (2) with a cylindrical addition (9) which penetrates into the beaker form of the second probe element (3) and encloses the electronic circuit (5).

6. Measuring device as claimed in one of the claims 1 to 5 in which the electronic circuit (5) incorporates one or more frequency filters.

7. Measuring device as claimed in claim 6 in which the frequency filters have pass values in the range from 0.1 to 100 Hz.

8. Method for the detection of structural changes in solid bodies using the measuring device as claimed in one of the above claims, wherein potential changes in a void (4) near the surface of the body to be measured (10) is recorded against a reference potential on the surface of the body to be measured.

9. Method as claimed in claim 8 wherein the electrical signals in the frequency range 0.1 to 100 Hz for the purposes of earthquake prediction.

10. Method as claimed in claims 8 or 9 wherein the electrical signals detected are converted into optical signals and transmitted over optical fibre cables.

11. Method as claimed in one of the claims 8 to 10 in which a number of measuring systems as claimed in one or more of the claims 1 to 7 are used simultaneously at different positions on the body to be measured (10).

12. Method as claimed in claim 11, in which intensity differences and/or phase relationships between the signals detected by the different measuring devices are used for the evaluation.

13. Method as claimed in one of the claims 8 to 12 in which the signals detected are digitized and processed by a processor station (40).

## Patentansprüche

1. Meßvorrichtung zur Erkennung von Strukturveränderungen in Festkörpern (10), in denen elektrische Feldveränderungen mit Hilfe von einer oder mehreren elektrisch leitenden Sonden (1) aufgezeichnet, durch eine elektronische Schaltung (5) verstärkt und dann in einer Auswertungseinheit (40, 41) verarbeitet und aufgezeichnet werden,
bei der
jede Sonde (1) aus mindestens zwei Elementen (2, 3) besteht, die gegeneinander isoliert sind, wobei das erste Element (2) eine planare Konstruktion ist und das zweite Element (3) in einen Hohlraum (4) in dem zu messenden Körper eingeführt und gegenüber diesem Körper isoliert wird,
und bei der die elektronische Schaltung (5) zur Verstärkung der Potentialdifferenz zwischen den Elementen (2, 3) ebenfalls in dem Hohlraum (4) in dem zu messenden Körper angeordnet ist.

2. Meßvorrichtung nach Anspruch 1, wobei das erste Sondenelement (2) in galvanischem Kontakt mit dem zu messenden Körper (10) ist.

3. Meßvorrichtung nach Anspruch 1 und 2, bei der das erste Sondenelement (2) eine Reihe von getrennt eingebauten Teilen (21, 22, 23, 24) umfaßt, die elektrisch miteinander verbunden sind.

4. Meßvorrichtung nach Anspruch 1 und 2, bei der die elektronische Schaltung (5) zumindest teilweise von einem der Sondenelemente (2, 3) umschlossen ist, um Störsignale auszufiltern.

5. Meßvorrichtung nach einem der Ansprüche 1 bis 4, in der das erste Sondenelement eine planare Metallelektrode (2) mit einem zylindrischen Anbau (9) umfaßt, der in die Becherform des zweiten Sondenelements (3) hineinragt und die elektronische Schaltung (5) umschließt.

6. Meßvorrichtung nach einem der Ansprüche 1 bis 5, bei der die elektronische Schaltung (5) einen oder mehrere Frequenzfilter umfaßt.

7. Meßvorrichtung nach Anspruch 6, bei der die Frequenzfilter Paßwerte im Bereich von 0,1 bis 100 Hz aufweisen.

8. Verfahren zur Erkennung von Strukturveränderungen in Festkörpern unter Anwendung der Meßvorrichtung nach einem der obengenannten Ansprüche, bei der Potentialveränderungen in einem Hohlraum (4) in der Nähe der Oberfläche des zu messenden Körpers (10) im Vergleich mit einem Bezugspotential an der Oberfläche des zu messenden Körpers aufgezeichnet werden.

9. Verfahren nach Anspruch 8, bei dem die elektrischen Signale im Frequenzbereich 0,1 bis 100 Hz zur Vorhersage eines Erdbebens dienen.

10. Verfahren nach Anspruch 8 oder 9, bei dem die gemessenen elektrischen Signale in optische Signale umgewandelt und über optische Faserkabel übertragen werden.

11. Verfahren nach einem der Ansprüche 8 bis 10, bei dem eine Reihe von Meßsystemen nach einem oder mehreren der Ansprüche 1 bis 7 gleichzeitig an verschiedenen Stellen an dem zu messenden Körper (10) eingesetzt werden.

12. Verfahren nach Anspruch 11, bei dem Intensitätsunterschiede und/oder Phasenbeziehungen zwischen den von den verschiedenen Meßvorrichtungen gemessenen Signalen für die Auswertung herangezogen werden.

13. Verfahren nach einem der Ansprüche 8 bis 12, bei dem die gemessenen Signale digitalisiert und von einer Prozessorstation (40) verarbeitet werden.

## Revendications

1. Dispositif de mesure pour la détection de modifications structurelles dans des corps solides (10), dans lequel les fluctuations de champ électrique sont enregistrées, au moyen d'une ou plusieurs sondes (1) conductrices de l'électricité, avec amplification par un circuit électronique (5) puis traitement et enregistrement dans une unité d'évaluation (40, 41)
dans lequel
chaque sonde (1) est constituée d'au moins deux éléments (2, 3) isolés l'un de l'autre, le premier élément (2) étant de conception planaire et le deuxième élément (3) étant inséré dans un vide (4) existant dans le corps objet de la mesure et isolé de lui,
et dans lequel le circuit électronique (5), destiné à amplifier la différence de potentiel existant entre les éléments (2, 3), est également situé dans le vide (4) se trouvant dans le corps à mesurer.

2. Dispositif de mesure selon la revendication 1, dans lequel le premier élément de sonde (1) est en contact galvanique avec le corps (10) objet de la mesure.

3. Dispositif de mesure selon les revendications 1 et 2, le premier élément de sonde (2) comprenant un nombre donné de parties (21, 22, 23, 24) installées séparément, reliées électriquement ensemble.

4. Dispositif de mesure selon les revendications 1 et 2, le circuit électronique (5) étant au moins partiellement entouré par l'un des éléments de sonde (2, 3) afin de supprimer par effet d'écrantage les signaux d'interférence.

5. Dispositif de mesure selon l'une des revendications 1 à 4, dans lequel le premier élément de sonde comprend une électrode métallique planaire (2) avec un appendice cylindrique (9) pénétrant dans la forme en gobelet du deuxième élément de sonde (3) et enclosant le circuit électronique (5).

6. Dispositif de mesure selon l'une des revendications 1 à 5, dans lequel le circuit électronique (5) incorpore un ou plusieurs filtres de fréquence.

7. Dispositif de mesure selon la revendication 6, dans lequel les filtres de fréquence ont des caractéristiques passantes situées dans la plage allant de 0,1 à 100 Hz.

8. Procédé de détection des variations structurelles dans des corps solides utilisant des dispositifs de mesure selon l'une des revendications ci-dessus, dans lequel les fluctuations de potentiel se produisant dans un vide (4) proche de la surface du surface du corps (10) objet de la mesure sont enregistrées par rapport à un potentiel de référence existant à la surface du corps à mesurer.

9. Procédé selon la revendication 8, dans lequel les signaux électriques de fréquence sont situés dans la plage allant de 0,1 à 100 Hz, dans le but de prédiction des tremblements de terre.

10. Procédé selon les revendications 8 ou 9, dans lequel les signaux électriques détectés sont convertis en des signaux optiques transmis sur des câbles à fibres optiques.

11. Procédé selon l'une des revendications 8 à 10, dans lequel on utilise un nombre donné de systèmes de mesure, selon une ou plusieurs des revendications 1 à 7, simultanément, en différentes positions sur le corps (10) objet de la mesure.

12. Procédé selon la revendication 11, dans lequel les différences d'intensité et/ou les relations de phase entre les signaux détectés par les différents dispositifs de mesure sont utilisées en vue de l'évaluation.

13. Procédé selon l'une des revendications 8 à 12, dans lequel les signaux détectés sont numérisés et traités par un poste à processeur (40).
